# EUROPÄISCHE PATENTANMELDUNG

(11) **EP 1 103 365 A1**
(43) Veröffentlichungstag der Anmeldung: **30.05.2001**
(21) Anmeldenummer: 00124379.9
(22) Anmeldetag: 20.11.2000
(51) Int. Cl.: B29C 51/06

(54) **Vorrichtung zum Tiefziehen von becherförmigen Körpern**

(30) Priorität: 24.11.1999 DE 19956506
(71) Anmelder: Optipack GmbH & Co. KG, 86850 Fischach-Aretsried (DE)
(72) Erfinder: Westphal, Bodo, 37075 Göttingen (DE)
(74) Vertreter: Stahl, Gerhard F.W.

(57) **Zusammenfassung**

Die Erfindung betrifft eine Vorrichtung zum Tiefziehen von becherförmigen Körpern aus einer Kunststofffolie, umfassend ein Oberwerkzeug (8)und ein Unterwerkzeug (9), die relativ zueinander koaxial beweglich sind, um die Kunststofffolie (13) zwischen sich einzuklemmen, einen in dem Oberwerkzeug (8) angeordneten Vorstrecker (19), der am unteren Ende einer in dem Oberwerkzeug koaxial verschiebbar gelagerten und mit einem Antrieb verbundenen Stange (18) befestigt ist, und Luftkanäle (22,23), über die der von dem Vorstrecker (19), dem Oberwerkzeug (8) und der Folie (13) begrenzte Raum mit Druckluft beaufschlagbar ist. Der Vorstrecker (19) ist gegenüber dem Oberwerkzeug (8) abgedichtet, und die Luftkanäle (22,23) sind in der Stange (18) und in dem Vorstrecker (19) ausgebildet.

## Beschreibung

Die Erfindung betrifft eine Vorrichtung zum Tiefziehen von becherförmigen Körpern aus einer erhitzten Kunststofffolie, umfassend ein Oberwerkzeug und ein Unterwerkzeug, die relativ zueinander koaxial beweglich sind, um die Kunststofffolie zwischen sich einzuklemmen, einen in dem Oberwerkzeug angeordneten Vorstrecker, der am unteren Ende einer in dem Oberwerkzeug koaxial verschiebbar gelagerten und mit einem Antrieb verbundenen Stange befestigt ist, und Luftkanäle, über die der von dem Vorstrecker, dem Oberwerkzeug und der Folie begrenzte Raum mit Druckluft beaufschlagbar ist.

Bei einer bekannten Vorrichtung dieser Gattung ist der Außendurchmesser des Vorstreckers kleiner als der Innendurchmesser des Oberwerkzeugs, so daß diese beiden Teile zwischen sich einen Ringkanal begrenzen. Um die Verformung der zwischen dem Ober- und dem Unterwerkzeug eingespannten erhitzten Kunststofffolie zu unterstützen, kann deren Oberseite mit Druckluft beaufschlagt werden. Diese Druckluft wird von oben her durch Luftkanäle in dem Oberwerkzeug und durch den erwähnten Ringkanal zwischen Vorstrecker und Oberwerkzeug zugeführt. Wenn die Verformung der Kunststofffolie abgeschlossen ist, dann muß die in der Vorrichtung enthaltene Druckluft durch die Luftkanäle abgeleitet und entspannt werden, bevor das Ober- und Unterwerkzeug zum Auswerfen des ausgeformten becherförmigen Körpers auseinander gefahren werden können. Bei dieser bekannten Vorrichtung wird sowohl der Raum vor als auch hinter dem Vorstrecker mit Druckluft beaufschlagt. Die zum Ausformen eines becherförmigen Körpers erforderliche Druckluftmenge ist daher verhältnismäßig groß. Sowohl das Belüften als auch das Entlüften der Vorrichtung ist demzufolge nicht in einem beliebig kurzen Zeitraum durchführbar, was sich auf die Taktzeit und damit auf die Leistung der Vorrichtung nachteilig auswirkt. Da die Erzeugung der erforderlichen Druckluft mit nicht unerheblichen Kosten verbunden ist, ist die Wirtschaftlichkeit dieser bekannten Vorrichtung unbefriedigend.

Der Erfindung liegt die Aufgabe zugrunde, die gattungsgemäße Vorrichtung dahingehend weiterzubilden, daß sich die Taktzahl erhöhen und der Druckluftverbrauch verringern läßt.

Erfindungsgemäß wird diese Aufgabe dadurch gelöst, daß der Vorstrecker gegenüber dem Oberwerkzeug abgedichtet ist, und daß die Luftkanäle in der Stange und in dem Vorstrecker ausgebildet sind. Durch diese konstruktive Maßnahme wird nicht nur der mit Druckluft zu beaufschlagende Raum beträchtlich verkleinert, sondern der Vorstrecker bewirkt bei seiner Abwärtsbewegung in diesem Raum eine Vorverdichtung, wodurch die Verformung der Kunststofffolie unterstützt wird. Umgekehrt kommt es bei der Aufwärtsbewegung des Vorstreckers zu einer Vergrößerung des abgedichteten Raums und damit zu einer Entspannung der Druckluft, was deren Ableitung aus der Vorrichtung vereinfacht. Die Zuführung und die Ableitung der Druckluft kann daher in einer kürzeren Zeitdauer durchgeführt und somit die Taktzahl der Vorrichtung gesteigert werden.

Bei einer Weiterbildung der Erfindung ist vorgesehen, daß der Vorstrecker aus einem mit der Kunststofffolie in Berührung kommenden Unterteil und aus einem diesem fest verbundenen Kolben aus Metall besteht, wobei der Kolben mit mindestens einer an der Innenwand des Niederhalters anliegenden Dichtung versehen ist. Diese Ausführungsform hat den Vorteil, daß das zum Tiefziehen dienende Unterteil und der zur Abdichtung dienende Kolben des Vorstreckers aus einem für ihre Funktion optimalen Material bestehen können.

Gemäß einer weiteren Ausgestaltung der Erfindung ist vorgesehen, daß die Oberseite des Kolbens mit Druckluft beaufschlagbar ist. Dadurch kann die von der Stange auf den Vorstrecker ausgeübte Vortriebskraft unterstützt werden. Diese Maßnahme ermöglicht eine schwächere Ausbildung des der Stange zugeordneten Antriebs.

Zwei Ausführungsbeispiele der Erfindung sind in den Zeichnungen dargestellt und werden nachfolgend näher erläutert. Es zeigt:
Fig. 1 einen Längsschnitt durch eine erste Ausführungsform einer Vorrichtung zum Tiefziehen von becherförmigen Körpern aus einer erhitzten Kunststofffolie, und
Fig. 2 einen Längsschnitt ähnlich wie Fig. 1 durch eine abgewandelte Ausführungsform.

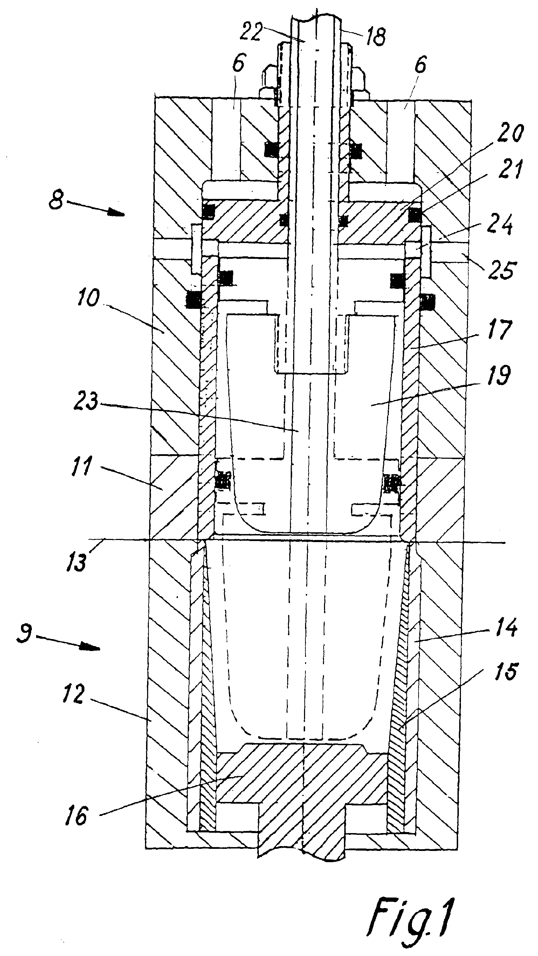

Die in Fig. 1 schematisch im Längsschnitt dargestellte Vorrichtung besteht aus einem Oberwerkzeug 8 und einem Unterwerkzeug 9. Das Oberwerkzeug 8 um-faßt einen rohrförmigen Mantel 10 und eine mit diesem koaxial verbundene ringförmige Schnittplatte 11. Das Unterwerkzeug 9 umfaßt ebenfalls einen rohrförmigen Mantel 12. Das Unterwerkzeug 9 ist gegenüber dem Oberwerkzeug 8 vertikal beweglich, um dazwischen eine Folie 13 aus einem thermoplastischen Kunststoff einzuklemmen. In eine Sackbohrung des Mantels 12 des Unterwerkzeugs 9 sind ein Schnittstempel 14 und ein gekühlter Formeinsatz 15 konzentrisch eingesetzt. In dem Formeinsatz 15 ist ein Auswerfer 16 vertikal beweglich gelagert. In einer Sackbohrung des Mantels 10 des Oberwerkzeugs 8 ist ein Niederhalter 17 vertikal beweglich gelagert. Der Niederhalter 17 ist pneumatisch nach unten vorgespannt, so daß er über die Unterseite der Schnittplatte 11 vorsteht. Zu diesem Zweck ist der Mantel 10 mit einer Bohrung 6 versehen, über die der Raum über dem Niederhalter 17 mit siner Druckluftquelle verbunden ist. Beim Hochfahren des Unterwerkzeugs 9 drückt der Niederhalter 17 die Kunststofffolie 13 gegen den oberen Rand des Schnittstem-pels 14, bevor der Mantel 12 des Unterwerkzeugs 9 an der Schnittplatte 11 zur Anlage gelangt. In einer Bohrung des Niederhalters 17 ist eine Stange 18 vertikal beweglich gelagert, deren unteres Ende mit einem Vorstrecker 19 verbunden ist. Der Vorstrecker 19 kann z. B. aus einem mit Glasfasern verstärkten Kunststoffmaterial bestehen. Eine derartige Vorrichtung zum Tiefziehen von becherförmigen Körpern aus einer Kunststofffolie ist allgemein bekannt und bedarf daher keiner näheren Erläuterung.

Auf das untere Ende der Stange 18 ist ein Kolben 20 aus Metall aufgeschrumpft oder aufgeschraubt, der mit einer Dichtung 21 am Innenumfang des Niederhalters 17 dichtend anliegt. Ein nach unten ragender Fortsatz des Kolbens 20 ist mit einem Außengewinde versehen, auf das der Vorstrecker 19 aufgeschraubt ist. Die Stange 18 und der Vorstrecker 19 sind mit einer koaxialen Bohrung 22 bzw. 23 versehen. Im Niederhalter 17 und im Oberwerkzeug 8 sind Bohrungen 24 und 25 ausgebildet, die zur Belüftung des Raumes über dem Kolben 20 dienen. Die Oberseite des Kolbens 20 wird daher stets mit dem atmosphärischen Druck beaufschlagt.

Zum Tiefziehen eines becherförmigen Körpers wird die mit einer (nicht gezeigten) Heizeinrichtung erhitzte Kunststofffolie 13 zwischen dem Oberwerkzeug 8 und dem abgesenkten Unterwerkzeug 9 angeordnet. Daraufhin wird das Unterwerkzeug 9 nach oben bewegt, bis es die Folie 13 an das Oberwerkzeug 8 andrückt, wie in Fig. 1 gezeigt. Daraufhin wird die Stange 18 mit einer (nicht gezeigten) mechanischen oder pneumatischen Antriebseinrichtung nach unten bewegt. Dadurch gelangt der Vorstrecker 19 an der erhitzten Kunststofffolie 13 zur Anlage und drückt diese nach unten in den von dem Formeinsatz 15 begrenzten Formhohlraum hinein. Bei dieser Abwärtsbewegung des Vorstreckers 19 verkleinert sich der von dem Kolben 20, dem Vorstrecker 19, der Kunststofffolie 13 und dem Niederhalter 17 begrenzte Raum, und es kommt zu einer entsprechenden Verdichtung. In Fig. 1 ist die untere Stellung des Auswerfers 16 und des Kolbens 20 mit strichpunktierten Linien dargestellt. Durch die Bohrungen 22 und 23 der Stange 18 bzw. des Vorstreckers 19 wird Druckluft eingeleitet, um den Druck noch weiter zu erhöhen, so daß die Kunststofffolie 13 an die Innenfläche des Formeinsatzes 15 bzw. an die Oberseite des Auswerfers 16 angedrückt wird. Durch die Berührung mit dem gekühlten Formeinsatz 15 kühlt die tiefgezogene Kunststofffolie 13 ab, und sie wird formstabil. Daraufhin wird die Stange 18 zusammen mit dem Kolben 20 und dem Vorstrecker 19 nach oben bewegt. Das Volumen des von dem Kolben 20, dem Niederhalter 17 und der tiefgezogenen Folie 13 begrenzten Raumes nimmt dabei zu, so daß sich die darin enthaltene Druckluft entspannt. Über die Bohrungen 22 und 23 der Stange 18 bzw. des Vorstreckers 19 kann der Druck vollständig abgebaut werden. Sodann wird das Unterwerkzeug 9 nach unten bewegt, und der Auswerfer 16 wird gegenüber dem Formeinsatz 15 nach oben bewegt, um den tiefgezogenen becherförmigen Körper auszuwerfen.

Durch die Vorverdichtung bei der Abwärtsbewegung der aus Vorstrecker 19 und Kolben 20 bestehenden Baueinheit und durch die entsprechende Entspannung bei der Aufwärtsbewegung dieser Baueinheit kann die zum Einblasen der Druckluft bzw. zum anschließenden Ausblasen der Druckluft erforderliche Zeitdauer erheblich verkürzt werden. Dies ermöglicht eine sehr hohe Taktzahl der Vorrichtung.

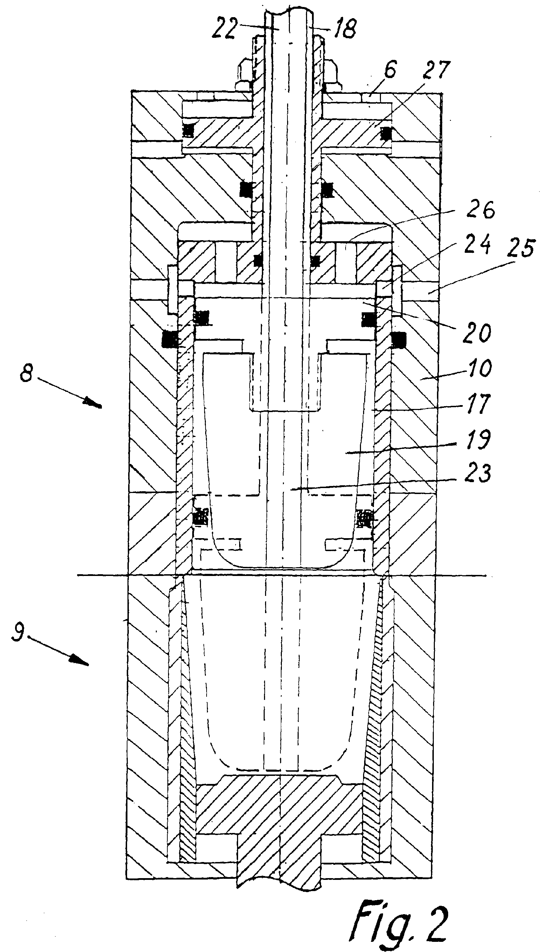

Da die Abwärtsbewegung des Kolbens 20 entgegen dem seine Unterseite beaufschlagenden Druck ausgeführt wird, muß die der Stange 18 zugeordnete Antriebseinrichtung entsprechend kräftig ausgebildet sein. Bei der in Fig. 2 gezeigten abgewandelten Ausführungsform wird die Abwärtsbewegung des Kolbens 20 unterstützt, indem dessen Oberseite mit Druckluft beaufschlagt wird. Zu diesem Zweck sind die in dem Niederhalter 17 und in dem Oberwerkzeug 8 ausgebildeten Bohrungen 24 und 25 über (nicht gezeigte) Ventile mit der gleichen Druckluftquelle wie die Bohrung 22 der Stange 18 verbunden. Damit der Luftdruck auf den Niederhalter 17 keine nach oben gerichtete Kraft ausübt, ist der Niederhalter 17 mit einer Ausgleichsbohrung 26 versehen. Der Niederhalter 17 weist bei dieser Ausführungsform einen kolbenartigen Ringflansch 27 auf, dessen Oberseite über die Bohrung 6 mit Druckluft beaufschlagbar ist. Durch die zusätzliche Druckbeaufschlagung der Oberseite des Kolbens 20 wird zwar der Verbrauch an Druckluft erhöht, andererseits kann aber die der Stange zugeordnete Antriebseinrichtung schwächer ausgebildet sein. Es ist daher im Einzelfall zu entscheiden, welche der beiden vorstehend beschriebenen Ausführungsformen vorteilhafter ist.

### Bezugszeichenliste:

- 6: Bohrung in 10
- 8: Oberwerkzeug
- 9: Unterwerkzeug
- 10: Mantel von 8
- 11: Schnittplatte
- 12: Mantel von 9
- 13: Kunststolffolie
- 14: Schnittstempel
- 15: Fornieiiisatz
- 16: Auswerfer
- 17: Niederhalter
- 18: Stange
- 19: Vorstrecker
- 20: Kolben
- 21: Dichtung
- 22: Bohrung in 18
- 23: Bohrung in 19
- 24: Bohrung in 17
- 25: Bohrung in 10
- 26: Ausgleichsbohrung
- 27: Ringflansch

## Patentansprüche

1. Vorrichtung zum Tiefziehen von becherförmigen Körpern aus einer erhitzten Kunststofffolie, umfassend ein Oberwerkzeug und ein Unterwerkzeug, die relativ zueinander koaxial beweglich sind, um die Kunststofffolie zwischen sich einzuklemmen, einen in dem Oberwerkzeug angeordneten Vorstrecker, der am unteren Ende einer in dem Oberwerkzeug koaxial verschiebbar gelagerten und mit einem Antrieb verbundenen Stange befestigt ist, und Luftkanäle, über die der von dem Vorstrecker, dem Oberwerkzeug und der Folie begrenzte Raum mit Druckluft beaufschlagbar ist, dadurch **gekennzeichnet,** daß der Vorstrecker (19) gegenüber dem Oberwerkzeug (8) abgedichtet ist, und daß die Luftkanäle (22, 23) in der Stange (18) und in dem Vorstrecker (19) ausgebildet sind.

2. Vorrichtung nach Anspruch 1, dadurch **gekennzeichnet,** daß der Vorstrecker aus einem mit der Kunststofffolie (13) in Berührung kommenden Unterteil (19) und aus einem mit diesem fest verbundenen Kolben (20) aus Metall besteht, wobei der Kolben (20) mit mindestens einer an der Innenwand des Niederhalters (17) anliegenden Dichtung (21) versehen ist.

3. Vorrichtung nach Anspruch 2, dadurch **gekennzeichnet,** daß die Oberseite des Kolbens (20) mit Druckluft beaufschlagbar ist.

4. Vorrichtung nach Anspruch 3, dadurch **gekennzeichnet,** daß der über dem Kolben (20) befindliche Raum über Bohrungen (24, 25) des Oberwerkzeugs (8) mit einer Druckluftquelle verbindbar ist.
